# FASCICULE DE BREVET EUROPEEN

(11) **EP 2 674 039 B1**
(45) Date de publication et mention de la délivrance du brevet: **04.03.2015**
(21) Numéro de dépôt: 13171707.6
(22) Date de dépôt: 12.06.2013
(51) Int. Cl.: A23L 1/00, A23L 1/22, A23L 1/221, A23L 1/223, A23L 1/224

(54) **Procédé de pulverisation d'au moins une huile et/ou au moins un arôme à la surface d'herbes aromatiques**
Sprühverfahren mindestens eines Öls und/oder mindestens eines Aromas auf die Oberfläche von Kräutern
Method of spraying at least one oil and/or at least one aroma on the surface of herbs

(30) Priorité: 14.06.2012 FR 1255571; 10.12.2012 FR 1261820
(43) Date de publication de la demande: 18.12.2013
(73) Titulaire: Sainte Lucie, 60270 Gouvieux (FR)
(72) Inventeur: ROYER, Marion, F-60660 MELLO (FR); BOURGET, Joseph, F-84220 ROUSSILLON (FR)
(74) Mandataire: Rhein, Alain

(56) Documents cités:
- EP-A1- 0 351 878
- EP-A1- 0 704 162
- EP-A2- 0 407 299
- WO-A1-92/10946
- FR-A- 1 346 373
- FR-A1- 2 413 888
- FR-A1- 2 483 189
- FR-A1- 2 763 795
- GB-A- 1 303 807
- US-A- 4 572 836

## Description

La présente invention concerne le domaine des aliments et plus particulièrement celui des herbes aromatiques.

La présente invention trouvera son application principalement dans le domaine des herbes aromatiques déshydratées, telles que notamment l'ail, l'aneth, le basilic, le cerfeuil, la ciboulette coupée ou tubulaire, la coriandre, l'échalote, l'estragon, le laurier, la marjolaine, la menthe, l'oignon, le persil, le romarin, la sarriette, la sauge, le thym, ou encore l'origan.

L'invention concerne plus particulièrement un procédé dont le but principal est de permettre la préservation et l'amélioration des qualités organoleptiques d'herbes aromatiques, qui ont été préalablement déshydratées, et qui sont ensuite traitées par le procédé selon la présente invention.

Traditionnellement, les herbes aromatiques fraiches subissent un procédé de déshydratation afin de permettre une conservation plus longue et plus aisée desdites herbes.

Un des procédés pouvant être utilisé pour permettre la déshydratation d'herbes aromatiques consiste en un séchage desdites herbes par air chaud. Pour ce faire, de l'air chaud est mis en circulation sur les produits à déshydrater ; la température de l'air chaud est de l'ordre de 70°C et le procédé doit être mis en oeuvre pendant plusieurs heures. Cela a pour conséquence des pertes importantes au niveau des qualités gustatives du produit qui est déshydraté selon ce procédé.

La déshydratation des herbes aromatiques peut également être obtenue selon un procédé de lyophilisation, qui consiste en la dessiccation d'un produit préalablement surgelé, ici les herbes aromatiques. La dessiccation du produit est obtenue plus particulièrement par sublimation de l'eau, qui passe donc directement d'un état solide à un état gazeux. Cependant, un tel procédé présente également l'inconvénient d'entrainer une partie des molécules aromatiques, ces dernières étant en effet susceptibles de s'évaporer en même temps que l'eau.

En conséquence, les procédés de déshydratation existants, bien qu'ils permettent une augmentation de la durée de conservation des herbes aromatiques, présentent l'inconvénient d'entrainer une diminution des qualités organoleptiques desdites herbes, ces dernières présentant généralement une texture, une couleur, ou encore un gout, qui sont généralement de qualité inférieure à celle des produits à l'état frais. Pour remédier à cela, un certain nombre de techniques ont été développées afin de tenter de conserver les qualités organoleptiques d'un produit tout en augmentant la durée de conservation de celui-ci.

On connait notamment, par le document de brevet GB1303807 un procédé pour la préparation d'une composition aromatique à base d'oignon dans lequel de la poudre d'oignon (plante aromatique déshydratée) est mélangée à de l'huile alimentaire (en particulier de l'huile d'arachide et de l'huile de maïs). La mixture est ensuite pulvérisée et conduit à une fine poudre ayant la saveur de l'oignon frit.

On connait aussi, par le document de brevet EP 0 407 299, un procédé de traitement des herbes aromatiques ou des plantes à essences, dans lequel la plante à traiter est dans un premier temps immergée dans une solution aqueuse comportant notamment un composé anti-oxygène, tel que de l'acide ascorbique ou de l'ascorbate de sodium, et au moins un dépresseur de l'activité de l'eau, notamment du chlorure de calcium ou de sodium. Après essorage et surgélation, les produits sont ensuite traités par immersion dans une seconde solution comprenant un stabilisant, un anti-oxygène, un rétenteur d'arôme et un exhausteur de gout.

Cependant, ce procédé nécessite un grand nombre d'étapes et l'utilisation de nombreux composés ; il est de ce fait couteux en temps et peu économique. De plus, il ne permet pas d'obtenir un résultat optimal en termes de qualités organoleptiques du produit.

On connait encore, par le document de brevet WO 92/10946, un procédé consistant en une immersion des plantes aromatiques dans un bain liquide comportant un agent osmotique capable de déshydrater le produit tout en infusant dans le tissu de celui-ci, formant ainsi une couche solide et amorphe recouvrant le produit au moment du séchage. L'agent osmotique utilisé lors de ce procédé peut notamment consister en un monosaccharide ou en un disaccharide, tel que du fructose, du glucose, du maltose, etc.

Cependant, l'enrobage de la plante par l'intermédiaire d'un monosaccharide ou d'un disaccharide entraine la formation d'une croute sur ladite plante, rendant cette dernière dure et cassante. Un autre inconvénient de cette technique réside dans le fait que l'utilisation d'un agent osmotique de type glucose, fructose, ou autre, entraine une sensation sucrée au moment de l'ingestion du produit. Une telle sensation peut s'avérer particulièrement déplaisante lorsque la plante aromatique est destinée à l'assaisonnement d'un plat salé, ce qui est généralement le cas.

On connait encore, par le document de brevet FR 2 413 888 un procédé dans lequel les herbes fraîches sont fragmentées dans un bain d'huile avant d'être emballées pour être proposées au consommateur.

Ce procédé ne permet cependant de conserver les herbes pendant une durée suffisamment longue. De plus, les quantités d'huile utilisées lors de la mise en oeuvre de ce procédé font que le produit final obtenu est extrêmement gras, ce qui rend difficile le conditionnement.

Dans le même registre, il est également connu de placer des herbes aromatiques dans une huile alimentaire, de type huile d'olive notamment, et ce afin d'aromatiser l'huile dans laquelle sont immergées les herbes. Cependant, en aucun cas une telle technique ne permet une commercialisation de l'herbe aromatique en elle-même.

Ainsi, à ce jour, aucune technique existante ne permet un traitement satisfaisant de plantes ou d'herbes aromatiques qui ont été préalablement déshydratées afin de restaurer et d'améliorer, voir de modifier, leurs qualités organoleptiques, c'est-à-dire d'une part leurs qualités gustatives et d'autre part leur aspect visuel, afin de permettre le conditionnement de ces herbes ou plantes en vue de les proposer aux consommateurs.

A cet effet, la présente invention concerne un procédé pour l'amélioration des qualités organoleptiques d'au moins une herbe aromatique dans lequel :
- on déshydrate ladite herbe aromatique
- on pulvérise au moins une huile alimentaire et/ou au moins un arôme à la surface de ladite herbe aromatique.

De manière avantageuse, on pulvérise au moins une huile alimentaire et/ou au moins un arôme à la surface d'au moins une herbe aromatique choisie parmi l'ail, l'aneth, le basilic, le cerfeuil, la ciboulette, la coriandre, l'échalote, l'estragon, le laurier, la marjolaine, la menthe, l'oignon, l'origan, le persil, le romarin, la sarriette, la sauge et le thym.

En particulier, l'huile alimentaire consiste en au moins une huile végétale choisie par exemple parmi l'huile d'olive, l'huile de tournesol, l'huile d'arachide, l'huile de lin, l'huile de noisette, l'huile de noix, l'huile de pépins de raisin, l'huile de colza, l'huile de soja, l'huile de sésame, l'huile d'onagre, l'huile d'avocat, l'huile de germes de blé et l'huile de périlla.

Préférentiellement, on désodorise l'huile alimentaire, préalablement à l'étape de pulvérisation de ladite huile à la surface de l'herbe aromatique, en injectant de la vapeur d'eau sous vide à ladite huile.

Selon une autre particularité de l'invention, on pulvérise une proportion d'huile alimentaire comprise entre 0.1 et 10% en volume, de préférence entre 0.5 et 3% en volume, par rapport au volume de l'herbe aromatique traitée.

De manière intéressante, on maintient l'herbe aromatique en suspension dans l'air lors de l'étape de la pulvérisation de l'huile et/ou de l'arôme. Il est également possible de disposer l'herbe aromatique sur un support lors de l'étape de la pulvérisation de l'huile et/ou de l'arôme.

Avantageusement, on pulvérise une proportion d'arôme comprise entre 0.01 et 10% en volume, de préférence entre 0.0125 et 3% en volume, par rapport au volume de l'herbe aromatique traitée.

Selon un mode de réalisation préférentiel, on pulvérise, en plus de ladite huile alimentaire, au moins un arôme consistant par exemple en une huile essentielle extraite ou non de l'herbe aromatique à la surface de celle-ci. Par exemple, on peut pulvériser un mélange d'huile alimentaire et d'huile essentielle extraite ou non de ladite herbe aromatique. Il est également possible de pulvériser séparément, à la surface de l'herbe aromatique, l'huile alimentaire et l'huile essentielle extraite ou non de ladite herbe aromatique.

Avantageusement, on pulvérise ladite huile essentielle dans une proportion comprise entre 0.1 et 2 ‰, de préférence entre 0.125 et 1‰ en volume, par rapport au volume de l'herbe aromatique traitée.

La présente invention concerne également une herbe aromatique enrobée d'une pellicule composée d'huile alimentaire, dans une proportion comprise entre 0.1 et 10%, de préférence entre 0.5 et 3% en volume par rapport au volume de l'herbe aromatique et d'un arôme dans une proportion comprise entre 0.01 et 10%, de préférence entre 0.0125 et 3%, en volume par rapport au volume de l'herbe aromatique traitée.

Selon un mode de réalisation particulier, l'herbe aromatique peut également être enrobée d'une pellicule composée d'huile alimentaire, dans une proportion comprise entre 0.5 et 3% en volume par rapport au volume de ladite herbe aromatique, et d'une huile essentielle extraite ou non de ladite herbe aromatique, dans une proportion comprise entre 0.125 et 1‰ en volume, par rapport au volume de ladite herbe aromatique.

L'invention est également relative à une composition d'herbes aromatiques, comportant au moins deux herbes aromatiques telles que décrites ci-dessus.

La présente invention présente de nombreux avantages. D'une part, elle permet une longue conservation des herbes aromatiques traitées selon le procédé selon l'invention, étant donné que celles-ci sont déshydratées. D'autre part, le présent procédé permet une amélioration notable des qualités organoleptiques des herbes aromatiques traitées ; en particulier, l'aspect visuel de ces herbes, auxquelles le procédé selon l'invention a été appliqué, est nettement amélioré et se rapproche de l'aspect d'une herbe fraichement récoltée. Les caractéristiques gustatives et olfactives des herbes aromatiques sont également améliorées. Par ailleurs, la pulvérisation de substances aromatisantes, naturelles ou artificielles identiques à un arôme naturel, permet de proposer au consommateur des préparations variées.

D'autres caractéristiques et avantages de l'invention ressortiront de la description détaillée qui va suivre des modes de réalisation non limitatifs de l'invention en référence à l'unique figure annexée qui représente schématiquement le procédé selon l'invention.

Plus particulièrement, la présente invention concerne un procédé destiné à permettre une amélioration des qualités organoleptiques d'au moins une herbe aromatique.

On entend par « herbe aromatique », parfois également désignée par « plante aromatique », des plantes qui sont cultivées pour leurs qualités aromatiques, condimentaires ou encore médicinales ; généralement, ce sont les feuilles de ces herbes qui sont utilisées soit fraiches, soit séchées ou déshydratées, pour assaisonner, relever ou parfumer une préparation culinaire.

Le procédé selon l'invention comporte essentiellement deux étapes ; dans une première étape, ladite herbe aromatique est déshydratée.

Le processus de déshydratation peut être effectué par tout moyen connu de l'homme du métier. En particulier, les herbes aromatiques peuvent être déshydratées selon la technique dite de lyophilisation, dans laquelle l'eau contenue dans lesdites herbes subit dans un premier temps une étape de surgélation à basse température avant d'être sublimée par la mise en place d'une dépression. Selon un autre mode de réalisation, la déshydratation des herbes peut être effectuée par la mise en oeuvre d'un procédé de séchage par air chaud.

Généralement, les herbes qui sont traitées par le présent procédé sont également coupées ou hachées en morceaux de petite taille avant l'étape de déshydratation, comme illustré sur la figure jointe, ou après cette étape, de manière à favoriser leur conditionnement et leur présentation au consommateur.

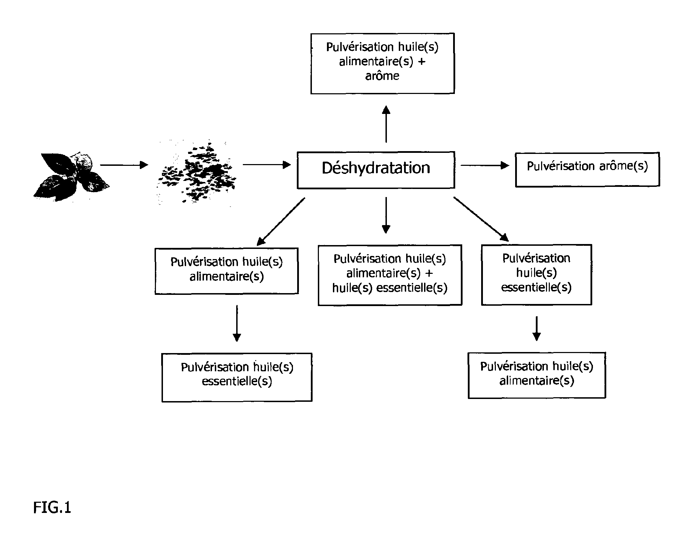

Le procédé selon l'invention peut être mis en oeuvre sur un seul type d'herbe aromatique, par exemple le basilic, comme illustré sur la figure 1. Cependant, un tel mode de réalisation n'est pas limitatif de l'invention, et le présent procédé peut également être mis en oeuvre sur un mélange comportant une pluralité d'herbes aromatiques, lorsque l'on veut par exemple obtenir une composition comprenant diverses herbes aromatiques, telles qu'un mélange d'herbes de Provence ou un bouquet garni, comportant, outre le basilic, de l'origan, de l'estragon, du romarin, du thym, etc.

Ainsi, dans la suite de la description, on entend par les expressions « l'herbe aromatique » ou « les herbes aromatiques » soit un seul type d'herbe aromatique, découpée ou non, soit un mélange comportant plusieurs types d'herbes aromatiques différentes, découpées ou non.

La seconde étape essentielle du procédé selon la présente invention consiste en une étape au cours de laquelle on pulvérise au moins une huile alimentaire et/ou au moins un arôme à la surface de l'herbe ou des herbes aromatique(s) dont on souhaite améliorer les qualités organoleptiques.

Ainsi, il est notamment possible de pulvériser une seule huile alimentaire à la surface de l'herbe aromatique, ou un mélange comportant plusieurs huiles alimentaires ou bien encore un mélange comportant une ou plusieurs huiles alimentaires avec un ou plusieurs autres types d'huiles, telles que par exemple des huiles essentielles.

Il est également possible de pulvériser un mélange comportant au moins une huile alimentaire et au moins un arôme.

On entend par « arôme » soit :
- un arôme naturel, d'origine végétale ou animale ayant subi un nombre limité de transformations qui sont autorisées par le code alimentaire faisant autorité dans le domaine de l'agro-alimentaire. Cette catégorie d'arôme englobe notamment les huiles essentielles naturelles ;
- un arôme identique au naturel composé d'au moins une substance identique à l'arôme naturel, ladite substance étant obtenue par synthèse chimique ; un arôme identique au naturel est identique d'un point de vue chimique, gustatif et de l'odeur à un arôme naturel ;
- un arôme artificiel, qui correspond à une molécule intéressante d'un point de vue aromatique pour renforcer ou améliorer le gout d'un aliment, mais qui n'existe pas, ou n'a pas encore été découvert, dans la nature ;
- un arôme de transformation, celui-ci étant obtenu par la réaction dite « de Maillard » qui permet de copier les réactions se produisant naturellement lors de la cuisson des aliments ;
- un arôme de fumée obtenu par combustion d'un bois de hêtre, de bouleau etc., puis récupération et condensation des fumées.

Un arôme pouvant être pulvérisé à la surface d'au moins une herbe aromatique dans le procédé se présente soit sous la forme d'une poudre, soit sous la forme d'une composition liquide.

Lorsque l'arôme se présente sous forme liquide, celui-ci peut être dissout dans un solvant approprié, notamment du polypropylène glycol, des triglycérides d'acide gras ou une huile notamment une huile végétale.

L'arôme peut également être pulvérisé seul à la surface de l'herbe aromatique, sans être combiné à une huile alimentaire.

Selon un mode de réalisation particulier, l'étape de pulvérisation d'au moins une huile alimentaire et/ou d'au moins un arôme est mise en oeuvre au moyen d'au moins une buse de pulvérisation ; cette dernière est préférentiellement bi-fluide, c'est-à-dire qu'elle permet simultanément une sortie d'air et de liquide.

Avantageusement, l'air et le liquide sont pulvérisés à une pression de l'ordre de 3 bars. Le liquide est ainsi dispersé de façon particulièrement uniforme, sous la forme d'un fin nuage, sur les herbes aromatiques.

Selon un autre mode de réalisation pouvant également être mis en oeuvre, la pulvérisation de l'huile alimentaire et/ou de l'arôme se fait au moyen d'une canne d'injection.

Une telle étape de pulvérisation a pour conséquence de permettre la formation d'une pellicule, particulièrement fine, d'huile et/ou d'arôme enrobant la totalité de la surface de ladite herbe, contrairement à certains procédés existants pour lesquels on obtient une épaisse croute sur le produit. L'utilisation d'un mécanisme de pulvérisation permet de recouvrir les herbes qui sont traitées d'une couche peu épaisse et homogène sur l'ensemble de la surface, en évitant l'utilisation d'une quantité trop importante notamment d'huile alimentaire.

D'une part, cette fine couche permet une nette amélioration de l'aspect visuel des herbes aromatiques traitées : l'huile pulvérisée apporte aux végétaux déshydratés une brillance qui se rapproche de celle des herbes fraîches. En effet, ces dernières présentent naturellement un aspect cireux que la pulvérisation d'huile alimentaire permet de restaurer en grande partie. L'aspect visuel des herbes aromatiques traitées selon le procédé de l'invention est de ce fait plus attrayant que celui des herbes déshydratées traditionnelles.

D'autre part, la fine pellicule d'huile à la surface des herbes aromatiques permet une extraction par osmose des huiles essentielles et des composés aromatiques qui sont contenus dans lesdites herbes. En conséquence, les herbes aromatiques déshydratées obtenues par la mise en oeuvre du présent procédé présentent des qualités olfactives et gustatives bien supérieures aux herbes obtenues traditionnellement.

D'un autre coté, la pulvérisation d'arôme, seul ou en combinaison avec une huile alimentaire, permet une orientation gustative de l'herbe aromatique. Il est alors possible de proposer une large gamme de préparations aromatisantes aux consommateurs.

Pour en revenir à l'étape de pulvérisation, cette dernière peut être préférentiellement réalisée en maintenant l'herbe aromatique qui doit être traitée en suspension dans l'air, puis en pulvérisant l'huile alimentaire et/ou l'arôme à la surface de ladite herbe.

Selon un autre exemple de mise en oeuvre du procédé, l'herbe aromatique est disposée sur un support pouvant être quelconque. Préférentiellement, ledit support est sensiblement horizontal ; il peut notamment consister en un tapis roulant sur lequel sont posées les herbes à traiter, et l'on pulvérise l'huile et/ou l'arôme à la surface desdites herbes.

Selon un mode de réalisation particulier, le procédé selon l'invention peut être mis en oeuvre préférentiellement sur au moins une herbe aromatique choisie dans la liste composée de l'ail, de l'aneth , du basilic, du cerfeuil, de la ciboulette (celle-ci pouvant notamment être de la ciboulette coupée ou de la ciboulette tubulaire), de la coriandre, de l'échalote, de l'estragon, du laurier, de la marjolaine, de la menthe, de l'oignon, du persil, du romarin, de la sarriette, de la sauge, du thym, ou encore de l'origan.

Le procédé selon l'invention est également particulièrement avantageux, car la pulvérisation notamment d'huile permet aux herbes traitées de retrouver un aspect global proche de celle des herbes fraiches, en créant un espace entre chacun des morceaux d'herbes coupées.

En particulier, dans le cas de la ciboulette tubulaire, celle-ci retrouve sa forme cylindrique lorsqu'elle est traitée par le présent procédé. De plus, ce dernier permet une pulvérisation uniforme même à l'intérieur des tubes de ciboulette.

Selon un mode de réalisation particulièrement avantageux du procédé selon l'invention, l'huile alimentaire qui est pulvérisée à la surface de l'herbe aromatique à traiter consiste en au moins une huile végétale choisie par exemple parmi l'huile d'olive, l'huile de lin, l'huile d'arachide, l'huile de tournesol, l'huile de noisette, l'huile de noix, l'huile de pépins de raisin, l'huile de colza, l'huile de soja, l'huile de sésame, l'huile d'avocat, l'huile d'onagre, l'huile de germes de blé et l'huile de périlla.

Il est ainsi possible, selon un exemple de mise en oeuvre du présent procédé, d'utiliser un mélange comportant notamment plusieurs huiles végétales alimentaires pour le pulvériser à la surface de l'herbe aromatique à traiter.

La pellicule créée par pulvérisation d'une huile végétale alimentaire sur les morceaux d'herbes aromatiques va permettre une extraction, par affinité, des arômes que contient l'herbe pour les amener en surface. En effet, les composés responsables de l'aromaticité des herbes présentent généralement une affinité particulière pour les composés tels que les huiles. Les qualités olfactives d'une part et gustatives d'autre part des herbes sur lesquelles a été mis en oeuvre le procédé sont de ce fait nettement améliorées.

En ce qui concerne la pulvérisation d'arôme, seul ou en combinaison avec au moins une huile alimentaire, il peut s'avérer intéressant de pulvériser par exemple un arôme artificiel de fromage ou de champignon à la surface d'au moins une herbe aromatique ; par exemple, il est possible de pulvériser un arôme de parmesan sur du basilic ou sur un mélange composé de basilic et d'ail ou encore de pulvériser un arôme de fromage bleu sur du persil.

En ce qui concerne les arômes de transformation, issus de la réaction de Maillard, il peut être intéressant de pulvériser un arôme de poulet rôti sur du thym ou encore un arôme de viande grillée par exemple sur un mélange d'herbes de Provence. Il est également envisageable de pulvériser, à la surface d'herbes de Provence, un arôme de fumée de sorte à créer un mélange « goût barbecue ».

Préférentiellement, l'huile alimentaire végétale est pulvérisée, à la surface de l'herbe aromatique à traiter dans une proportion comprise entre 0.1 et 10% en volume par rapport au volume de l'herbe aromatique à traiter. Plus préférentiellement encore, cette proportion est comprise entre 0.5 et 3% en volume d'huile alimentaire par rapport au volume de l'herbe à traiter.

Une telle proportion d'huile pulvérisée permet de créer une pellicule présentant une épaisseur optimale pour faciliter l'extraction par osmose moléculaire des arômes présents dans l'herbe traitée tout en recouvrant de façon uniforme la totalité de la surface de ladite herbe. De plus, le procédé selon l'invention est particulièrement économique car la pulvérisation permet de recouvrir les herbes en utilisant très peu d'huile alimentaire.

Enfin, préférentiellement, l'huile végétale alimentaire pulvérisée à la surface de l'herbe aromatique qui doit être traitée est désodorisée et/ou d'origine biologique.

Le processus de désodorisation de l'huile permet notamment d'éviter de dénaturer la saveur de l'herbe aromatique sur laquelle est pulvérisée ladite huile. Un tel processus peut notamment consister en une injection de vapeur d'eau sous vide, au travers de l'huile que l'on souhaite désodoriser. Cette étape d'injection permet un entrainement des molécules responsables de l'odeur, de la couleur, et du goût de l'huile.

En ce qui concerne à présent la quantité d'arôme pulvérisée, celle-ci est préférentiellement comprise entre 0.01% et 10% en volume par rapport au volume de l'herbe aromatique à traiter. Plus préférentiellement encore, et notamment lorsque l'arôme est pulvérisé en association avec l'huile alimentaire, cette proportion est comprise entre 0.0125 et 3% d'arôme en volume par rapport au volume de l'herbe aromatique traitée par le procédé selon l'invention.

Selon un mode de réalisation particulièrement avantageux, l'on pulvérise, à la surface d'une herbe aromatique, au moins une huile alimentaire et au moins un arôme consistant en une huile essentielle.

Selon un mode de réalisation préférentiel, l'huile essentielle pulvérisée en plus de l'huile alimentaire est extraite de l'herbe aromatique traitée selon le procédé.

La pulvérisation de l'huile essentielle peut être effectuée avant, simultanément ou après la pulvérisation de l'huile alimentaire, comme cela est représenté sur la figure 1.

Une telle pulvérisation permet avantageusement de restaurer les quantités d'huiles essentielles initialement présentes dans l'herbe aromatique fraiche.

Ainsi, par exemple, si l'herbe aromatique traitée consiste en du basilic, un mélange constitué par une huile végétale alimentaire et de l'huile essentielle extraite du basilic peut être pulvérisé à la surface de ladite herbe. Il peut en être de même pour toutes les herbes aromatiques qui ont été citées précédemment, c'est-à-dire que l'on pulvérise à leur surface un mélange d'huile constitué d'une part d'huile végétale alimentaire et d'autre part d'huile essentielle extraite de l'herbe.

De ce fait, préférentiellement, pour traiter l'ail, l'aneth, le cerfeuil, la ciboulette coupée ou tubulaire, la coriandre, l'échalote, l'estragon, le laurier, la marjolaine, la menthe, l'oignon, le persil, le romarin, la sarriette, la sauge, le thym et l'origan, de l'huile essentielle extraite respectivement de l'ail, de l'aneth, du cerfeuil, de la ciboulette, de la coriandre, de l'échalote, de l'estragon, du laurier, de la marjolaine, de la menthe, de l'oignon, du persil, du romarin, de la sarriette, de la sauge, du thym et de l'origan sera respectivement pulvérisée en étant mélangée à de l'huile alimentaire.

L'huile essentielle extraite de l'herbe à traiter peut également être pulvérisée séparément, c'est-à-dire que l'on pulvérise dans un premier temps l'huile alimentaire et, dans un second temps, ladite huile essentielle ou inversement.

Il est également possible de pulvériser à la surface d'une herbe aromatique, au moins une huile essentielle extraite d'une herbe différente, ou un mélange de plusieurs huiles essentielles, en plus de l'huile alimentaire.

Un tel mode de réalisation peut en particulier s'avérer intéressant dans le cas où l'herbe aromatique, traitée selon le présent procédé, ne présente pas naturellement une odeur suffisamment prononcée. Ainsi, grâce à une huile essentielle, ou à un mélange d'huiles essentielles, extraite(s) d'au moins une herbe aromatique différente de celle traitée, il est possible d'orienter gustativement ladite herbe traitée, rendant cette dernière intéressante d'un point de vue aromatique.

Par exemple, dans le cas du persil, il peut s'avérer judicieux de pulvériser, en plus de l'huile alimentaire, une huile essentielle extraite de la coriandre, également connue sous le nom de « persil chinois » ; en effet, la coriandre présente un goût et une odeur plus prononcés permettant de renforcer la note gustative du persil.

Il reste cependant avantageux de conserver des notes aromatiques proches de la plante traitée par le procédé selon l'invention. Notamment il est intéressant de pulvériser une huile ou un mélange d'huiles essentielles extraites d'herbes de la même famille que l'herbe traitée. En particulier, le persil et la coriandre appartiennent tous deux à la famille des Apiacées.

La pulvérisation d'au moins une huile essentielle qui n'est pas extraite de l'herbe aromatique traitée peut également s'avérer intéressante car certaines huiles essentielles présentent des propriétés anti-oxydantes plus importantes que d'autres. Ainsi, il peut être avantageux de pulvériser de l'huile essentielle extraite de la plante à traiter d'une part et une huile essentielle ayant des propriétés anti-oxydantes supérieures à la première. Cela permet un allongement de la durée de conservation des herbes traitées.

Les huiles essentielles présentant des propriétés anti-oxydantes particulièrement intéressantes sont notamment les huiles extraites de romarin, de sauge ou encore de basilic. L'huile anti-oxydante peut également être extraite du périlla.

Selon un exemple de réalisation particulièrement intéressant, l'huile essentielle extraite ou non de l'herbe aromatique est pulvérisée à la surface de cette dernière dans une proportion qui est préférentiellement comprise entre 0.1 et 2‰ (pour mille) en volume, par rapport au volume de ladite herbe aromatique traitée. Plus préférentiellement encore, cette proportion est comprise entre 0.125 et 1‰.

La pulvérisation d'une telle huile essentielle, extraite ou non de l'herbe aromatique qui est traitée par le procédé selon l'invention, permet de façon avantageuse de conférer une saveur supplémentaire à ladite herbe, et ainsi de l'orienter aromatiquement.

En appliquant le présent procédé, il est alors possible de réaliser un mélange comportant différents types d'herbes aromatiques présentant chacun une saveur améliorée.

Par exemple, il est possible de traiter du basilic avec une huile alimentaire et de l'huile essentielle extraite de basilic d'une part, et de traiter de l'estragon avec de l'huile essentielle extraite d'estragon et de les conditionner ensuite ensemble afin d'obtenir une composition comportant une pluralité d'herbes aromatiques différentes, et dont chacune présente des caractéristiques, notamment olfactives et gustatives, améliorées.

Enfin, un autre avantage conféré par la pulvérisation d'une huile végétale riche en oméga 3, telle que l'huile de périlla, l'huile de lin, de noix, de colza, de soja, ou de germes de blé, et/ou d'une huile essentielle extraite ou non de l'herbe aromatique traitée réside dans le fait que l'huile pulvérisée, et notamment l'huile essentielle, permet une protection du produit notamment vis-à-vis des phénomènes d'oxydation susceptibles d'altérer les qualités dudit produit ; ainsi, une telle pulvérisation favorise un allongement de la durée de conservation de l'herbe aromatique traitée.

L'invention concerne également une herbe aromatique enrobée d'une pellicule comportant au moins une huile alimentaire et/ou un arôme, cette pellicule étant fine. Préférentiellement, la composition de cette pellicule incorpore de l'huile alimentaire dans une proportion comprise entre 0.1 et 10%, de préférence entre 0.5 et 3% en volume par rapport au volume de l'herbe aromatique et/ou un arôme dans une proportion comprise entre 0.01 et 10%, de préférence entre 0.0125 et 3%, en volume par rapport au volume de l'herbe aromatique traitée.

La présente invention est également relative à une herbe aromatique enrobée d'une pellicule composée d'une part d'huile alimentaire et d'autre part d'au moins un arôme consistant en une huile essentielle extraite ou non de ladite herbe aromatique.

En particulier, la pellicule comporte de l'huile alimentaire dans une proportion comprise entre 0.1 et 10% et plus préférentiellement entre 0.5 et 3% en volume par rapport au volume de l'herbe aromatique et une huile essentielle extraite ou non de ladite herbe aromatique, dans une proportion comprise entre 0.1 et 2‰ et de préférence entre 0.125 et 1‰ en volume, par rapport au volume de ladite herbe aromatique.

Enfin, la présente invention concerne également une composition comportant au moins deux types d'herbes aromatiques différentes, comportant chacune à leur surface une pellicule composée d'huile alimentaire et/ou d'un arôme. Une composition selon l'invention peut également comporter d'une part une huile alimentaire et, d'autre part, une huile essentielle extraite ou non de l'herbe aromatique.

Par exemple, la composition peut comporter notamment du basilic sur lequel on a pulvérisé de l'huile alimentaire et de l'huile essentielle de basilic, et de l'estragon sur lequel on a pulvérisé de l'huile alimentaire et de l'huile essentielle d'estragon. La composition peut encore comporter d'autres herbes aromatiques à la surface desquelles on a pulvérisé, en plus de l'huile alimentaire, de l'huile essentielle.

## Revendications

1. Procédé pour l'amélioration des qualités organoleptiques d'au moins une herbe aromatique dans lequel :
- on déshydrate ladite herbe aromatique ;
- on pulvérise au moins une huile alimentaire à la surface de ladite herbe aromatique.

2. Procédé selon la revendication 1 **caractérisé en ce que** l'on pulvérise au moins une huile alimentaire à la surface d'au moins une herbe aromatique choisie parmi l'ail, l'aneth, le basilic, le cerfeuil, la ciboulette, la coriandre, l'échalote, l'estragon, le laurier, la marjolaine, la menthe, l'oignon, l'origan, le persil, le romarin, la sarriette, la sauge et le thym.

3. Procédé selon l'une quelconque des revendications 1 ou 2 **caractérisé en ce que** l'huile alimentaire consiste en au moins une huile végétale choisie parmi l'huile d'olive, l'huile de tournesol, l'huile d'arachide, l'huile de lin, l'huile de noisette, l'huile de noix, l'huile de pépins de raisin, l'huile de colza, l'huile de soja, l'huile de sésame, l'huile d'onagre, l'huile d'avocat, l'huile de germes de blé et l'huile de périlla.

4. Procédé selon l'une quelconque des revendications 1 à 3 **caractérisé en ce que** l'on désodorise l'huile alimentaire, préalablement à l'étape de pulvérisation de ladite huile à la surface de l'herbe aromatique, en injectant de la vapeur d'eau sous vide à ladite huile.

5. Procédé selon l'une quelconque des revendications 1 à 4 **caractérisé en ce qu'**on pulvérise une proportion d'huile alimentaire comprise entre 0.1 et 10% en volume, de préférence entre 0.5 et 3% en volume, par rapport au volume de l'herbe aromatique traitée.

6. Procédé selon l'une quelconque des revendications 1 à 5 **caractérisé en ce que** l'on maintient l'herbe aromatique en suspension dans l'air lors de l'étape de la pulvérisation de l'huile.

7. Procédé selon l'une quelconque des revendications 1 à 5 **caractérisé en ce que** l'on dispose l'herbe aromatique sur un support lors de l'étape de la pulvérisation de l'huile.

8. Procédé selon l'une quelconque des revendications 1 à 7 **caractérisé en ce que** l'on pulvérise, en plus de ladite huile alimentaire, au moins un arôme à la surface d'au moins une herbe aromatique.

9. Procédé selon la revendication 8 **caractérisé en ce qu'**on pulvérise une proportion d'arôme comprise entre 0.01 et 10% en volume, de préférence entre 0.0125 et 3% en volume, par rapport au volume de l'herbe aromatique traitée.

10. Procédé selon l'une quelconque des revendications 8 ou 9 **caractérisé en ce qu'**on pulvérise, en plus de ladite huile alimentaire, au moins un arôme consistant en une huile essentielle extraite ou non de l'herbe aromatique à la surface de celle-ci.

11. Procédé selon la revendication 10 **caractérisé en ce qu'**on pulvérise, à la surface de l'herbe aromatique, un mélange d'huile alimentaire et d'huile essentielle extraite ou non de ladite herbe aromatique.

12. Procédé selon la revendication 10 **caractérisé en ce qu'**on pulvérise séparément, à la surface de l'herbe aromatique, l'huile alimentaire et l'huile essentielle extraite ou non de ladite herbe aromatique.

13. Procédé selon l'une quelconque des revendications 10 à 12 **caractérisé en ce que** ladite huile essentielle est pulvérisée dans une proportion comprise entre 0.1 et 2 ‰, de préférence entre 0.125 et 1‰ en volume, par rapport au volume de l'herbe aromatique traitée.

14. Herbe aromatique obtenue selon l'une quelconque des revendications 8 ou 9 **caractérisée en ce qu'**elle est enrobée d'une pellicule composée d'huile alimentaire, dans une proportion comprise entre 0.1 et 10%, de préférence entre 0.5 et 3% en volume par rapport au volume de l'herbe aromatique et d'un arôme dans une proportion comprise entre 0.01 et 10%, de préférence entre 0.0125 et 3%, en volume par rapport au volume de l'herbe aromatique traitée.

15. Herbe aromatique obtenue selon l'une quelconque des revendications 10 à 13 **caractérisée en ce qu'**elle est enrobée d'une pellicule composée d'huile alimentaire, dans une proportion comprise entre 0.5 et 3% en volume par rapport au volume de ladite herbe aromatique, et d'une huile essentielle extraite ou non de ladite herbe aromatique, dans une proportion comprise entre 0.125 et 1‰ en volume, par rapport au volume de ladite herbe aromatique.

16. Composition d'herbes aromatiques comportant au moins deux herbes aromatiques selon la revendication 14 ou la revendication 15.

## Patentansprüche

1. Verfahren zur Verbesserung der organoleptischen Eigenschaften von mindestens einem Würzkraut, wobei:
- das besagte Würzkraut dehydriert wird;
- mindestens ein Speiseöl auf die Oberfläche des Würzkrautes gesprüht wird.

2. Verfahren nach Anspruch 1, **dadurch gekennzeichnet, dass** zumindest ein Speiseöl auf die Oberfläche von mindestens einem Kraut gesprüht wird, das aus Knoblauch, Dill, Basilikum, Kerbel, Schnittlauch, Koriander, Schalotten, Estragon, Lorbeer, Majoran, Minze, Zwiebel, Oregano, Petersilie, Rosmarin, Bohnenkraut, Salbei und Thymian ausgewählt wird.

3. Verfahren nach irgendeinem der Ansprüche 1 oder 2, **dadurch gekennzeichnet, dass** das Speiseöl mindestens ein pflanzliches Öl ist, dass aus Olivenöl, Sonnenblumenöl, Erdnussöl, Leinsamenöl, Haselnussöl, Walnussöl, Traubenkernöl, Rapsöl, Sojaöl, Sesamöl, Nachtkerzenöl, Avocadoöl, Weizenkeimöl und Perillaöl ausgewählt wird.

4. Verfahren nach irgendeinem der Ansprüche 1 bis 3, **dadurch gekennzeichnet, dass** das Speiseöl vor dem Schritt des Sprühens des besagten Öls auf die Oberfläche des Würzkrautes durch Einspritzen von Wasserdampf unter Vakuum in das Öl desodoriert wird.

5. Verfahren nach irgendeinem der Ansprüche 1 bis 4, **dadurch gekennzeichnet, daß** ein Anteil an Speiseöl zwischen 0,1 und 10 Vol%, vorzugsweise zwischen 0,5 und 3 Vol%, bezogen auf das Volumen des behandelten Würzkrautes, gesprüht wird.

6. Verfahren nach irgendeinem der Ansprüche 1 bis 5, **dadurch gekennzeichnet, dass** das Würzkraut während der Stufe des Sprühens des Öls in der Luft in Suspension gehalten wird.

7. Verfahren nach irgendeinem der Ansprüche 1 bis 5, **dadurch gekennzeichnet, daß** das Würzkraut während der Stufe des Sprühens des Öls auf einem Träger angeordnet wird.

8. Verfahren nach irgendeinem der Ansprüche 1 bis 7, **dadurch gekennzeichnet, dass** zusätzlich zu dem besagten Speiseöl mindestens ein Aromastoff auf die Oberfläche von mindestens einem Würzkraut gesprüht wird.

9. Verfahren nach Anspruch 8, **dadurch gekennzeichnet, dass** ein Anteil an Aromastoff zwischen 0,01 und 10 Vol%, vorzugsweise zwischen 0,0125 und 3 Vol%, bezogen auf das Volumen des behandelteten Würzkrautes, gesprüht wird.

10. Verfahren nach irgendeinem der Ansprüche 8 oder 9, **dadurch gekennzeichnet, dass** zusätzlich zu dem besagten Speiseöl mindestens ein Aromastoff, der aus einem ätherischen Öl besteht, das aus dem Würzkaut extrahiert wird oder nicht, auf die Oberfläche des letzteren gesprüht wird.

11. Verfahren nach Anspruch 10, **dadurch gekennzeichnet, dass** auf die Oberfläche des Würzkautes ein Gemisch aus Speiseöl und ätherischem Öl, das aus dem besagten Würzkaut extrahiert wird oder nicht, gesprüht wird.

12. Verfahren nach Anspruch 10, **dadurch gekennzeichnet, dass** auf die Oberfläche des Würzkautes Speiseöl und ätherisches Öl, das aus dem besagten Würzkaut extrahiert wird oder nicht, gesondert gesprüht wird.

13. Verfahren nach irgendeinem der Ansprüche 10 bis 12, **dadurch gekennzeichnet, dass** das besagte ätherische Öl in einem Anteil zwischen 0,1 und 2%, vorzugsweise zwischen 0,125 und 1%, bezogen auf das Volumen des behandelten Würzkautes gesprüht wird.

14. Würzkaut, erhalten nach irgendeinem der Ansprüche 8 oder 9, **dadurch gekennzeichnet, dass** es mit einem Film beschichtet ist, der aus Speiseöl in einem Anteil zwischen 0,1 und 10%, vorzugsweise zwischen 0,5 und 3 Vol%, bezogen auf das Volumen des Würzrautes und einem Aromastoff in einem Anteil zwischen 0,01 und 10%, vorzugsweise zwischen 0,0125 und 3 Vol%, bezogen auf das Volumen des behandelten Würzkrautes zusammengesetzt ist.

15. Würzkraut, erhalten nach irgendeinem der Ansprüche 10 bis 13, **dadurch gekennzeichnet, dass** es mit einem Film beschichtet ist, der aus Speiseöl in einem Anteil zwischen 0,5 und 3 Vol % bezogen auf das Volumen des besagten Würzkrautes und einem ätherischen Öl, das aus dem besagten Würzkraut extrahiert wird oder nicht, in einem Anteil zwischen 0,125 und 1 Vol% bezogen auf das Volumen des besagten Würzkrautes, zusammengesetzt ist.

16. Zusammensetzung von Würzkräutern, die mindestens zwei Würzkräuter nach Anspruch 14 oder Anspruch 15 umfasst.

## Claims

1. A method for improving the organoleptic qualities of at least one aromatic herb, wherein:
- said aromatic herb is dehydrated;
- at least one edible oil is sprayed on the surface of said aromatic herb.

2. A method according to claim 1, wherein at least one edible oil is sprayed on the surface of at least one aromatic herb selected from garlic, dill, basil, chervil, chives, cilantro, shallot, tarragon, bay leaf, marjoram, mint, onion, oregano, parsley, rosemary, savory, sage and thyme.

3. A method according to any one of claims 1 or 2, wherein the edible oil is at least one vegetable oil selected from olive oil, sunflower oil, peanut oil, linseed oil, hazelnut oil, walnut oil, grape seed oil, rapeseed oil, soybean oil, sesame oil, evening primrose oil, avocado oil, wheat germ oil and perilla oil.

4. A method according to any one of claims 1 to 3, wherein the edible oil is deodorized prior to the step of spraying said oil on the surface of the aromatic herb by injecting water steam under vacuum into said oil.

5. A method according to any one of claims 1 to 4, wherein a proportion of edible oil between 0.1 and 10% by volume, preferably between 0.5 and 3% by volume, based on the volume of the processed aromatic herb is sprayed.

6. A method according to any one of claims 1 to 5, wherein the aromatic herb is maintained in suspension in air during the step of spraying of the oil.

7. A method according to any one of claims 1 to 5, wherein the aromatic herb is arranged on a support during the step of spraying of the oil.

8. A method according to any one of claims 1 to 7, wherein, in addition to said edible oil, at least one flavor is sprayed on the surface of at least one aromatic herb.

9. A method according to claim 8, wherein a proportion of flavor between 0.01 and 10% by volume, preferably between 0.0125 and 3% by volume, based on the volume of the processed aromatic herb is sprayed.

10. A method according to any one of claims 8 or 9, wherein, in addition to said edible oil, at least one flavor consisting of an essential oil extracted or not from the aromatic herb is sprayed on the surface of the latter.

11. A method according to claim 10, wherein on the surface of the aromatic herb is sprayed a mixture of edible oil and essential oil extracted or not from said aromatic herb.

12. A method according to claim 10, wherein on the surface of the aromatic herb is separately sprayed the edible oil and the essential oil extracted or not from said aromatic herb.

13. A method according to any one of claims 10 to 12, wherein said essential oil is sprayed in a proportion between 0.1 and 2%, preferably between 0.125 and 1% by volume, based on the volume of the processed aromatic herb.

14. An aromatic herb obtained according to any one of claims 8 or 9, wherein it is coated with a film comprised of edible oil in a proportion between 0.1 and 10%, preferably between 0.5 and 3% in volume based on the volume of the aromatic herb and a flavor in a proportion between 0.01 and 10%, preferably between 0.0125 and 3% by volume based on the volume of processed aromatic herb.

15. An aromatic herb obtained according to any one of claims 10 to 13, wherein it is coated with a film comprised of edible oil in a proportion between 0.5 and 3% by volume based on the volume of said aromatic herb and an essential oil extracted or not from said aromatic herb in a proportion between 0.125 and 1% by volume based on the volume of said aromatic herb.

16. Composition of herbs including at least two aromatic herbs according to claim 14 or claim 15.
